# EUROPEAN PATENT APPLICATION

(11) **EP 1 693 824 A1**
(43) Date of publication of application: **23.08.2006**
(21) Application number: 06001242.4
(22) Date of filing: 20.01.2006
(51) Int. Cl.: G09G 3/34

(54) **Shutter device for pixel element and pixel arrangement**

(30) Priority: 18.02.2005 EP 05003576
(71) Applicant: Sony Deutschland GmbH, 50829 Köln (DE)
(72) Inventor: Teijido, Juan Manuel, Hedelfinger Strasse 61 70327 Stuttgart (DE); Noell, Wilfried, Rue A.-L. Breguet 2 2000 Neuchâtel (CH); Zickar, Michael, Rue A.-L. Breguet 2 2000 Neuchâtel (CH); De Rooij, Nico, Rue A.-L. Breguet 2 2000 Neuchâtel (CH)
(74) Representative: Müller - Hoffmann & Partner

(57) **Abstract**

A shutter device (10) and a pixel arrangement (100) are proposed wherein respective shutter elements (30) are adapted in order to controllably take a first geometrical state and a second geometrical state by different degrees of actuation and wherein said first geometrical state of said shutter element (30) is adapted in order to correspond to a non-actuated rest state of said shutter element (30).

## Description

The present invention relates to a shutter device for a pixel element and to a pixel arrangement. More particular, the present invention relates to MEMS based transmissive or transmitting micro-displays.

Recently, the development of micro-display devices becomes more and more important as such micro-display devices are involved in the development of many customer devices such as digital cameras, personal digital assistant device, projecting devices and the like. Therefore, enhancing the quality of the respective display characteristics is a crucial point.

Some of these characteristics are strongly connected with the properties and in particular with the reliability of the shutter devices on which pixel elements and therefore micro-display devices are based.

It is an object of the present invention to provide a shutter device for a pixel element and a pixel arrangement which have enhanced optical properties and an increased reliability.

The object underlying the present invention is achieved according to the present invention by a shutter device with the features according to independent claim 1. Additionally, the object underlying the present invention is achieved according to the present invention by the pixel arrangement according to the features of independent claim 41. Preferred embodiments of the shutter device according to the present invention and of the pixel arrangement according to the present invention are within the scope of the dependent sub-claims.

According to the present invention a shutter device for a pixel element is provided. According to the present invention said shutter device comprises a frame element and a shutter element wherein said frame element is adapted in order to comprise or to define a pixel area for a pixel element, wherein said shutter element is adapted in order to controllably take at least a first geometrical state and a second geometrical state by different degrees of actuation of said shutter element, wherein in said first geometrical state said shutter element is arranged in order to optically cover said pixel area to a comparable lower extent, wherein in said second geometrical state said shutter element is arranged in order to optically cover said pixel area to a comparable higher extent, and wherein said first geometrical state of said shutter element corresponds to a non-actuated rest state of said shutter element.

It is therefore a key idea of the present invention to form a shutter device for a pixel element in a way that said first geometrical state of said shutter element is adapted in order to correspond to a non-actuated rest state of said shutter element.

The inventive shutter device can be used for both display pixel elements as well as for sensor or detector pixel elements.

According to a preferred embodiment of the inventive shutter device in said non-actuated rest state of said shutter element said shutter device may be essentially completely open for an access to said pixel area.

Additionally or alternatively, according to a further preferred embodiment of the inventive shutter device said frame element may be adapted in order to comprise or to define said pixel area as a section of a plane.

Further additionally or alternatively, according to an advantageous embodiment of the inventive shutter device said shutter element may be or may comprise a plate-like construction, in particular having a first or upper surface and a second or lower surface.

Preferably, according to a further advantageous embodiment of the inventive shutter device in said non-actuated rest state of said shutter element said shutter element or a substantial part thereof may additionally or alternatively be positioned essentially perpendicularly with respect to said pixel area.

It is of particular advantage if according to a further advantageous embodiment of the inventive shutter device in an actuated state or in said at least one second geometrical state said shutter element or a substantial part thereof is additionally or alternatively tilted with respect to said pixel area by an angle below 90° with the lower surface of said shutter element facing said pixel area.

Additionally or alternatively, in an actuated state or in said at least one second geometrical state said shutter element or a substantial part thereof may be positioned essentially parallely with respect to said pixel area according to a further advantageous embodiment of the inventive shutter device.

Said shutter element may be mechanically connected to said frame element.

Further additionally or alternatively, according to an advantageous embodiment of the inventive shutter device a connecting element may be provided and said shutter element may be mechanically connected to said frame element by means of said connecting element.

As a further alternate or additional embodiment of the inventive shutter device said connecting element may be integrally formed with one or with both of said frame element and said shutter element.

Said connecting element may be or may comprise at least one hinge element.

Said hinge element may be a torsion hinge.

In said non-actuated rest state of said shutter element may correspond to an unbiased rest state of said hinge element.

Said connecting element may be adapted in order to comprise or to define a rotational axis or tilting axis about which said shutter element (30) is rotatable or tiltable, respectively, in order to take at least said first and said second geometrical states.

Said shutter element may comprise an edge and said shutter element may be mechanically connected to said connecting element by means of or at said edge.

Further additionally or alternatively, according to an advantageous embodiment of the inventive shutter device said frame element and said shutter element may be electrically insulated with respect to each other, in particular by means of said connecting element.

According to a further additional or alternative embodiment of the inventive shutter device said shutter element may be adapted in order to serve as a first electrode means.

According to a still further additional or alternative embodiment of the inventive shutter device a second electrode means may be provided and said second electrode means may be electrically insulated and uncoupled from said shutter element and in particular from said from said frame element.

Said second electrode means may preferably be optically transparent.

Said second electrode means may further be adapted and arranged in order to cover said pixel area.

Said second electrode means may be adapted and arranged in order to cover said pixel area at or from a lower surface of said frame element.

Said second electrode means is adapted and arranged in order to cover said pixel area at or from an input aperture of said frame element.

Said shutter element - as said first electrode means - may be adapted in order to be actuable by means of electrical potentials applied to said shutter element - as said first electrode means - and said second electrode means.

Said first and said second geometrical states of said shutter element may be definable by means of electrical potentials applied to said shutter element - as said first electrode means- and said second electrode means.

Additionally or alternatively, according to an preferred embodiment of the inventive shutter device one or a plurality of frame walls may be provided, in particular at the periphery of the frame element, protruding essentially perpendicular with respect to said pixel area.

A plurality of frame walls may be provided forming an open frame box surrounding the periphery of said frame element with bottom and top openings allowing an optical access to said pixel area.

Preferably, according to a further advantageous embodiment of the inventive shutter device said frame box may be adapted in order to form an open cuboid or parallelepiped.

Said shutter device may majorly be formed as a bulk micro-machining structure.

Further additionally or alternatively, according to an advantageous embodiment of the inventive shutter device said pixel area may have a length and/or a width in the range of about 10 *µ*m to about 20 *µ*m, preferably of about 15 *µ*m.

It is of particular advantage if according to a further advantageous embodiment of the inventive shutter device the area of said shutter element extends the pixel area.

The extension of said shutter element perpendicular to said rotational or tilting axis is larger than the extension of the pixel area along the same direction.

Said frame element and/or said frame box may be adapted in order to have or to define a input pixel aperture for receiving primary illumination light and to have or to define a output pixel aperture for emitting secondary illumination light derived from said primary illumination light.

The inventive shutter device may be adapted for a transmissive pixel element.

Preferably, according to a further advantageous embodiment of the inventive shutter device said pixel area may be defined by a pixel aperture extending through said frame element.

Additionally or alternatively, according to a further preferred embodiment of the inventive shutter device said input pixel aperture and said output pixel aperture may be positioned on opposite sides with respect to said frame element or said frame box.

The inventive shutter device may alternatively be adapted for a reflective pixel element.

In this case said pixel area may be defined by a reflective surface and said upper surface of said shutter element may be non-reflective.

Further in this case said pixel area may be defined by a non-reflective surface and said upper surface (30a) of said shutter element (30) may be reflective.

Additionally or alternatively, said input pixel aperture and said output pixel aperture are positioned on the same side with respect to said frame element or said frame box.

Additionally or alternatively, according to a further preferred embodiment of the inventive shutter device said shutter device is adapted for a micro-pixel or for a pixel of a micro-display.

According to a further aspect of the present invention a pixel arrangement is provided. The proposed pixel arrangement comprises a plurality of pixel elements each pixel element having a shutter device according to the present invention.

Preferably, shutter devices of directly neighbouring pixel elements may have a butterfly or an anti-butterfly configuration or orientation.

Alternatively, in said inventive pixel shutter devices of directly neighbouring pixel elements may have a same and common configuration or orientation.

According to a further aspect of the present invention micro-display is provided comprising a plurality of shutter devices according to the present invention in order to realize a plurality of pixels.

These and further aspects of the present invention will be further discussed in the following:
The present invention in particular relates inter alia to a MEMS based transmittive micro-display.
Different proposals have been done to realized transmittive MEMS µ-displays which overcome the limited optical efficiency of traditional t-LCD panels.
According to one aspect of the present invention an original vertical torsion shutter micro-display is proposed the fabrication of which is based on bulk micro-machining. The newly proposed architecture allows to achieve very high contrast and a relative lower actuation voltage.
One goal of the invention is to propose a high efficiency alternative for existing t-LCD µ-displays. Transmittive MEMS are not sensitive to polarization and their efficiency is only limited by the pixel fill factor.

### A. Brief concept and technology description

The shutter device is based on vertical shutters that are open in the off state (non-actuated) and closed in the (horizontal) actuated, i.e. on-state. The actuation is electrostatic. The electrostatic actuation is caused by the electric potential difference between the vertical shutter, preferably on electrical ground, i.e. zero Volt, and a transparent horizontal electrode, preferably on non-zero electrical potential/voltage V. The torsion hinge has the shape of a bridge and is attached in its middle to the top edge of the shutter piece and at its two ends to a surrounding frame, which also acts as electrically shielding walls around the shutter elements. There is no surface friction nor freely moving parts. The mechanical movement is based on flexing/twisting the hinge-bridge.

Hence the shutter is within a surrounding frame-shaped box, which is optically open at the top and bottom. The actuation rotates the shutter around the attached torsion hinge into the optical path.

The shutter is fabricated by etching vertical trenches into the device layer of a silicon-on-insulator (SOI) wafer. The buried oxide is used as an etch stop. Thus the trenches penetrate the device layer completely and the device layer thickness will be the length of the pixel in the closed-state. The silicon between two close trenches will be the shutter. The suspending bridge, which is holding the shutter, is fabricated after the etching of the shutter defining trenches. The shutter itself is fabricated by bulk micromachining and the torsion hinge by surface micro-machining. This gives a unique design and material freedom for both the hinge and shutter fabrication.

Variations in the design can be envisioned. E. g. instead of fabricating one shutter per boxing frame, two shutters can be located inside the centre of a longer box in a butterfly-type actuation configuration.

### B. Shutter components a possible embodiment

a. The vertically etched shutter with a flexing bridge that acts as a torsion hinge.
b. The length and width of the shutter correspond to etch depth and width of the trench, respectively. The trenches are fabricated by bulk micromachining of the device layer of an SOI wafer. The main part of the actual shutter is the "left-over" slab / panel of silicon between two very close trenches.
c. The bridge is attached between the middle of the upper shutter edge and the surrounding frame. The bridge acts as a pure torsion and flexing hinge.
d. The flexing hinge is not monolithic with the shutter and can be fabricated by surface micromachining in a separate process step.
e. The flexing hinge is the mechanical link between the shutter and the surrounding frame. The frame is bulk-micro machined simultaneously to the shutter-defining trenches. Thus the frame is a surrounding wall to the shutter and can considerably reduce potential electrical crosstalk between adjacent shutter elements.
f. The frame surrounding the shutter flap blocks scattered and stray light and avoids any optical crosstalk between adjacent shutter elements.
g. The transparent electrodes are fabricated on a separate glass wafer and are preferably made of ITO (Indium-Tin Oxide). To improve the optical contrast, the electrode chip contains opaque structures in form of aperture rectangles, that block light in the areas where light could go around the shutter flap.

### C. Novel aspects and advantages of a possible embodiment

a. Vertical torsion based shutters are in general new.
b. The vertically etched shutters have the advantage that they can be longer than the pixel pitch. In the close-state the shutter overlaps with an opaque thin film frame on the electrode chip.
c. Design variation: In order to increase the shutter speed and decrease the actuation voltage, the shutter length could be considerably longer than the pitch. Thus the flap does not have to turn 90° to shut completely. This, however, increases the inertial mass of the shutter slightly.
d. The shutter elements are surrounded by a frame (set of walls), which acts as both an optical and electrical shield to the shutter elements. The frame can considerably reduce crosstalk.
e. DRIE Fabrication on SOI wafers have the advantage of well-defined shutter dimensions.
D1. Proposed Micro-Fabrication Process (according to a first embodiment of the present invention)

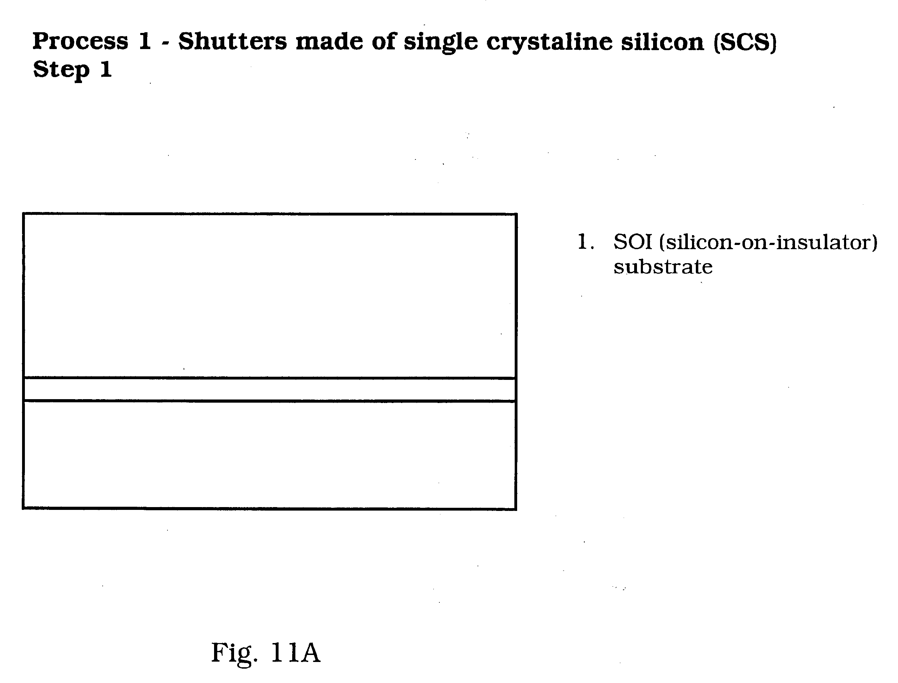

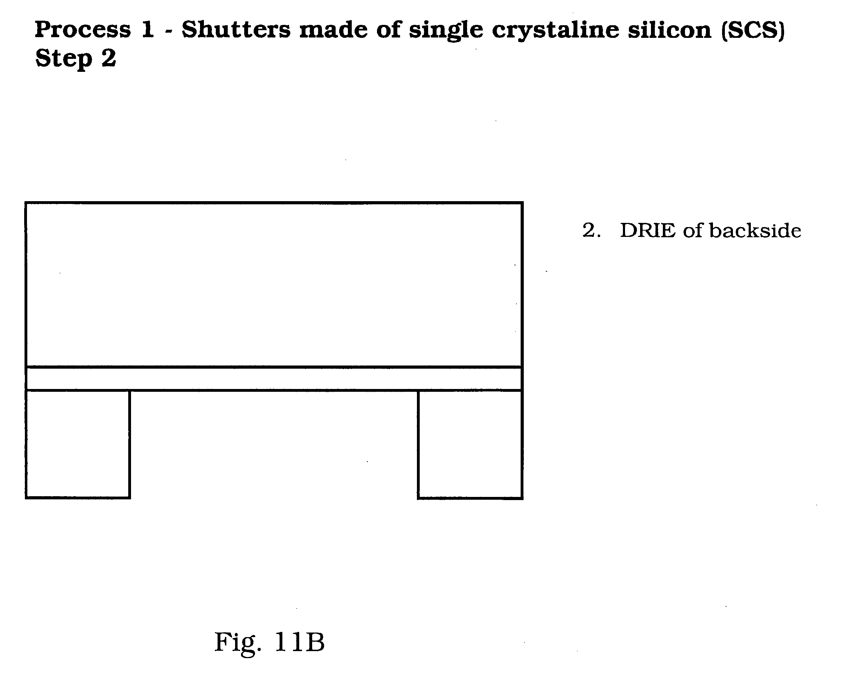

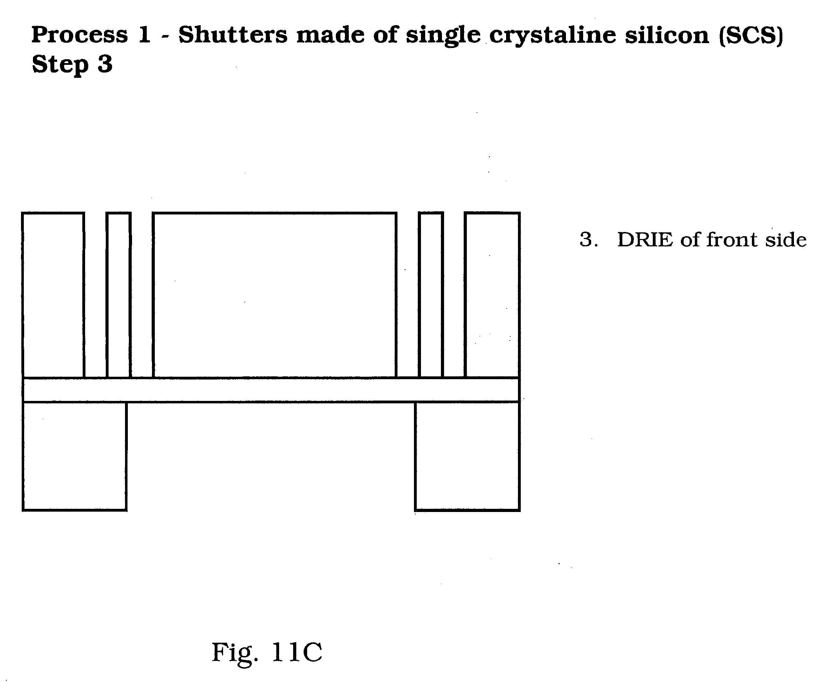

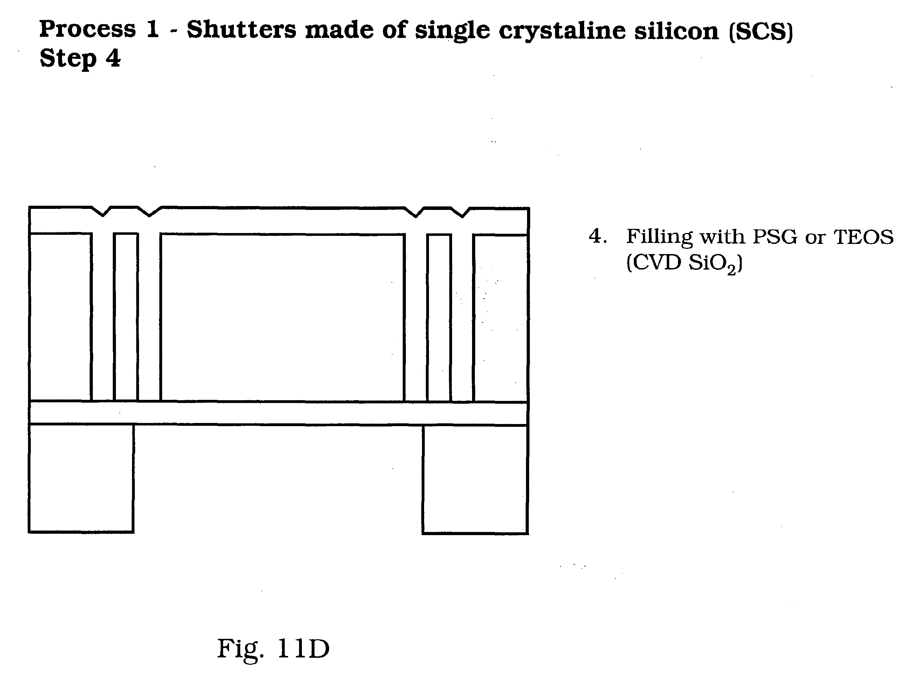

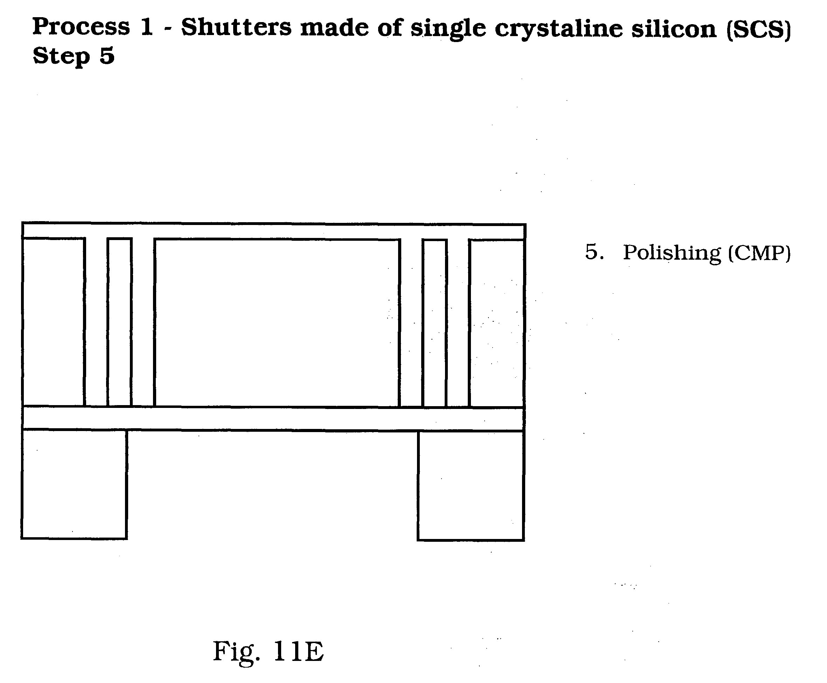

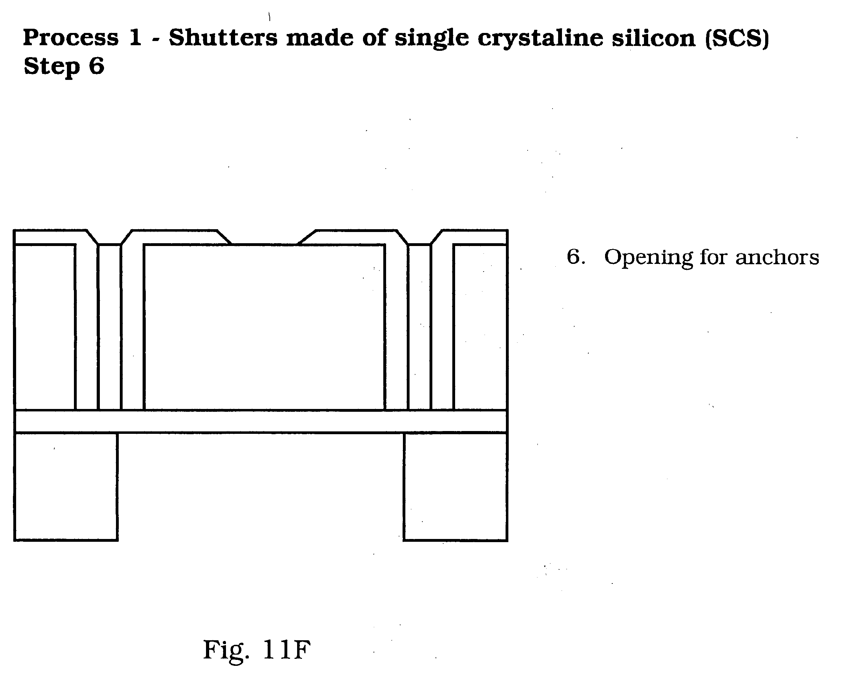

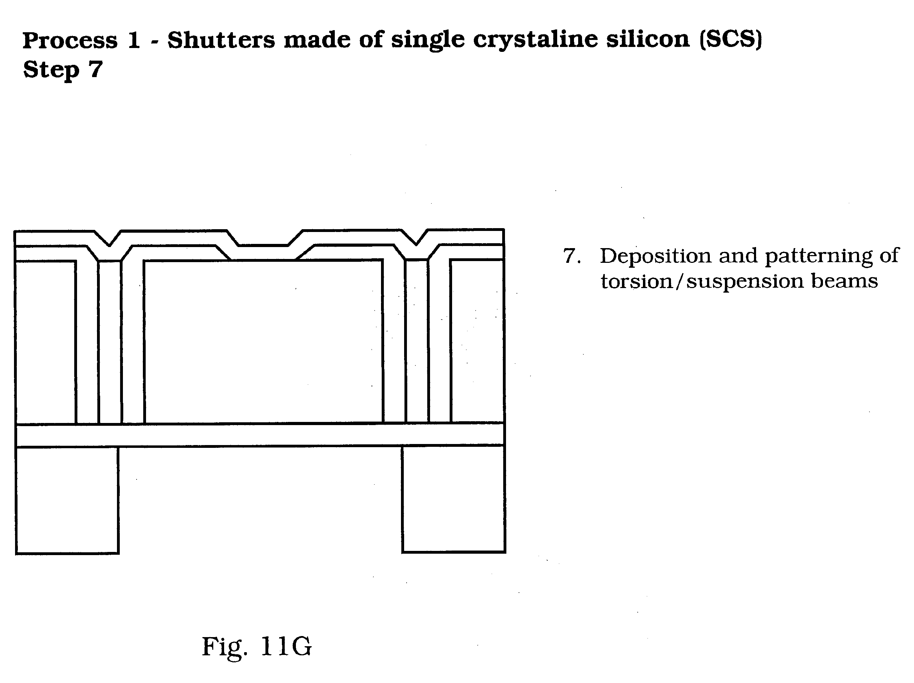

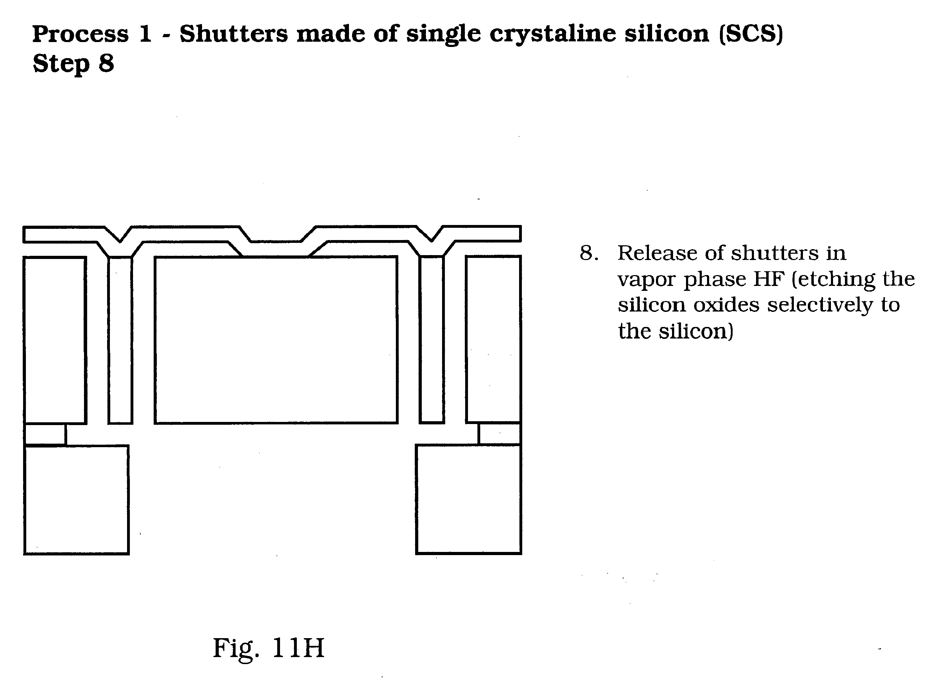

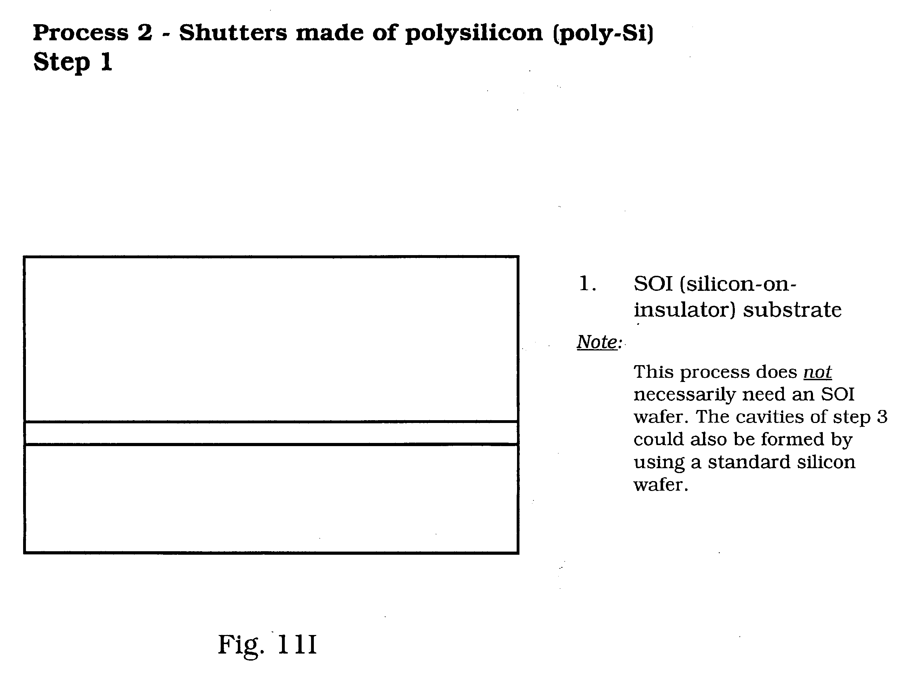

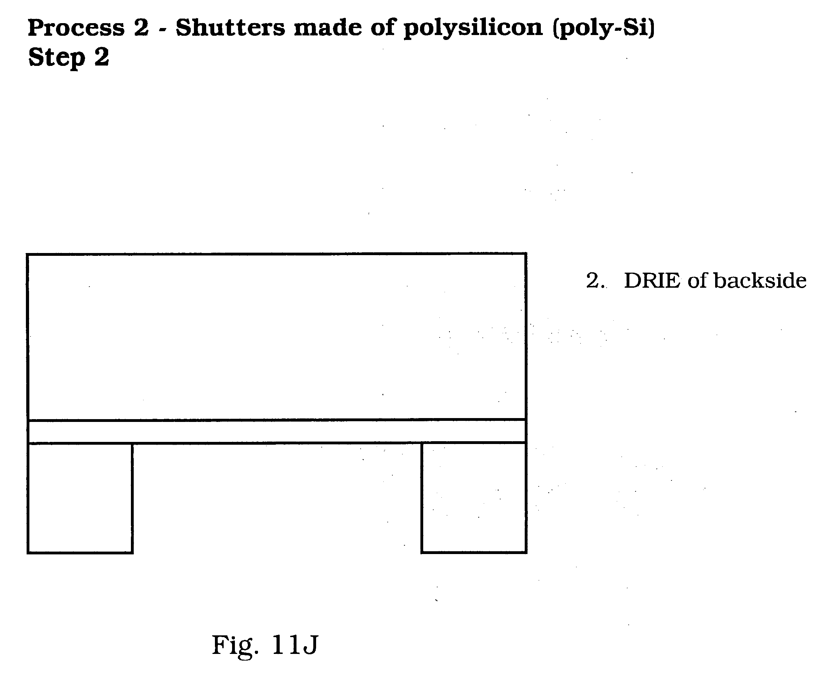

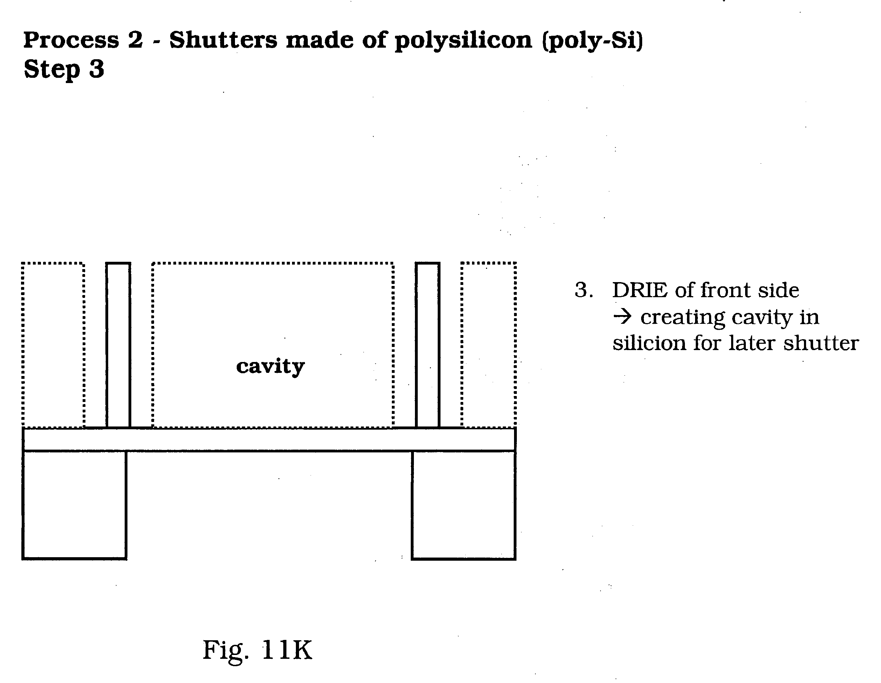

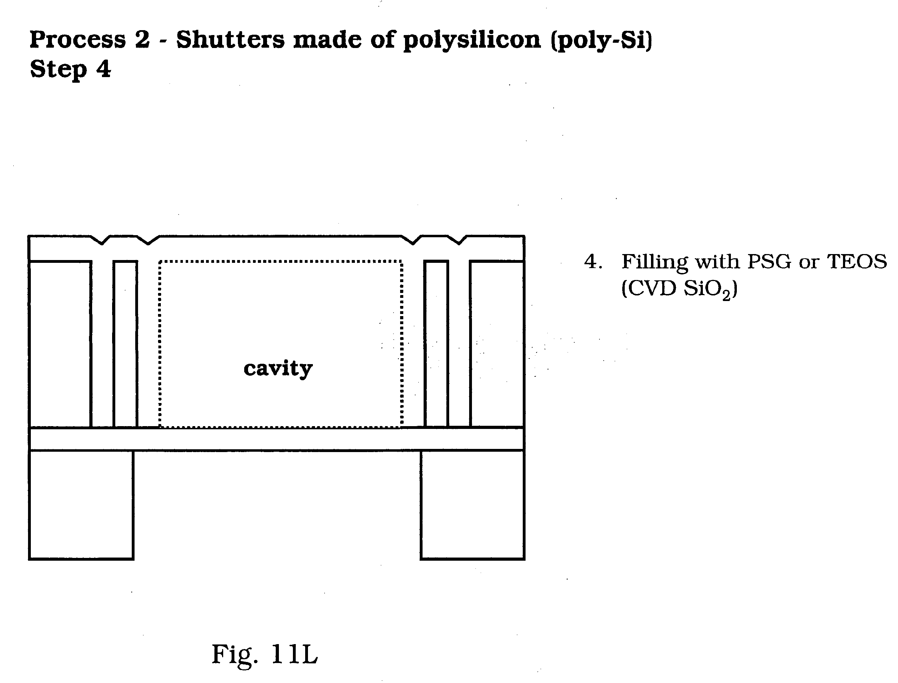

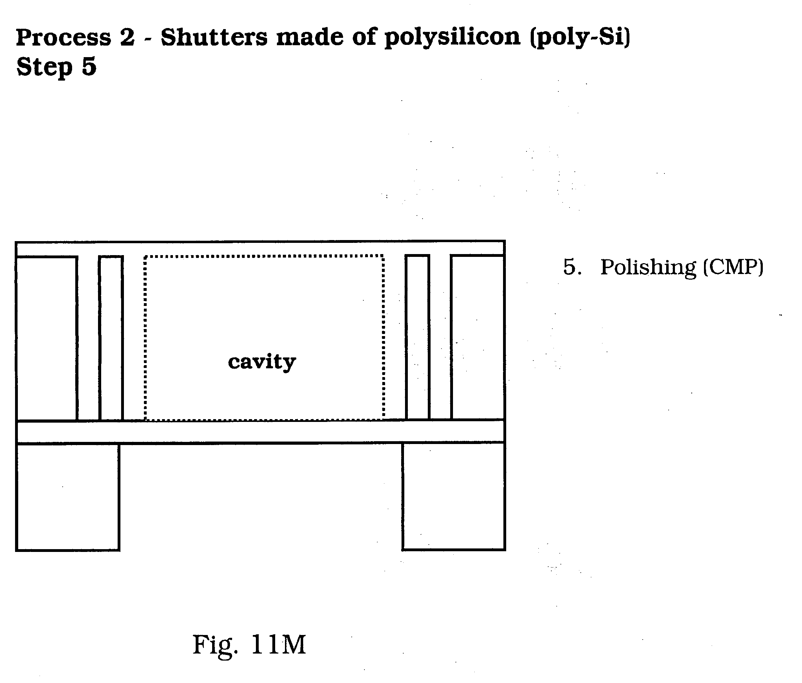

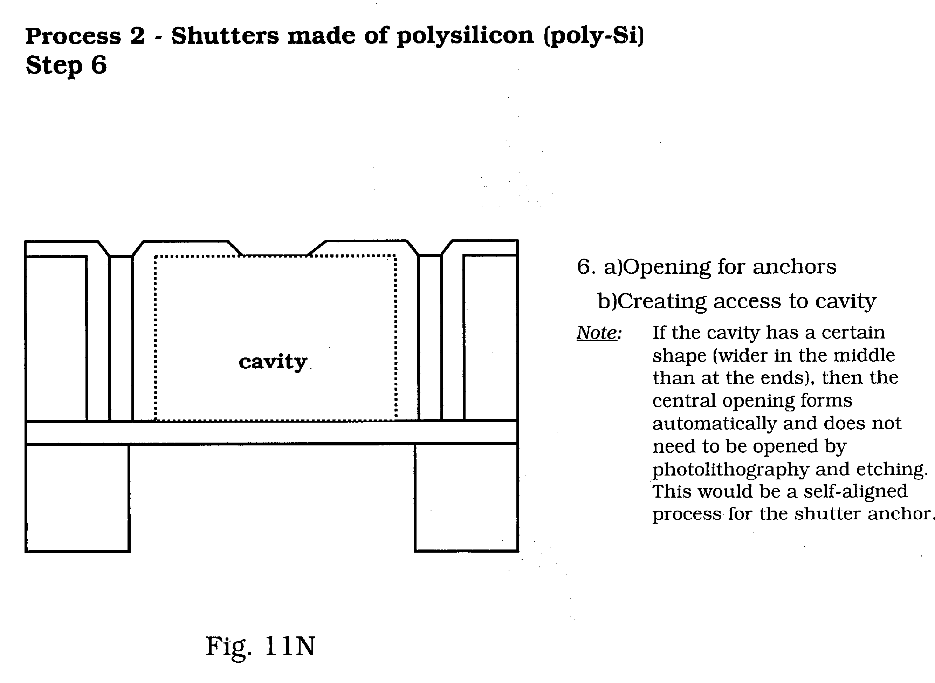

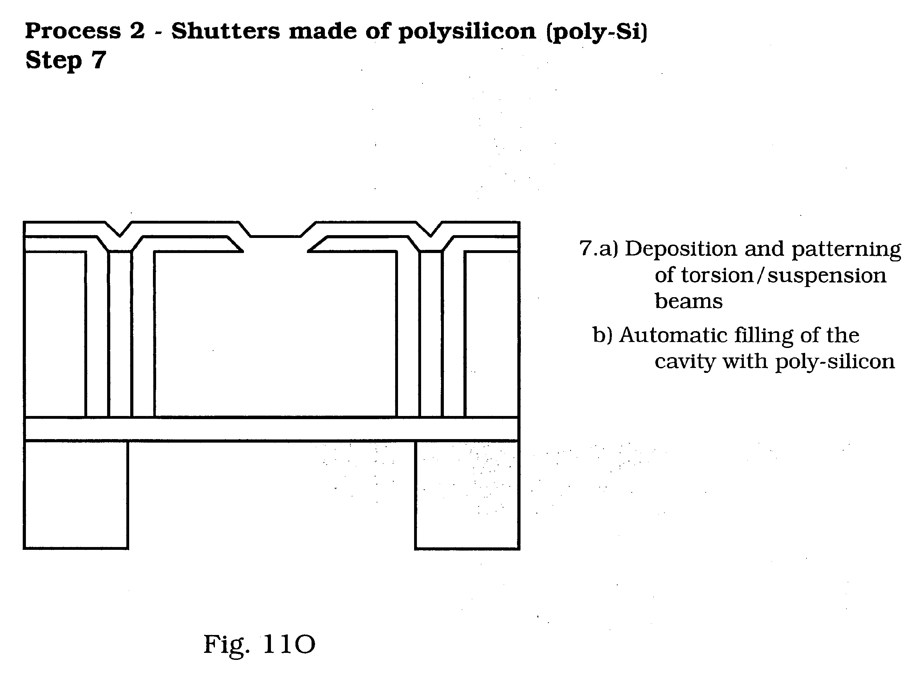

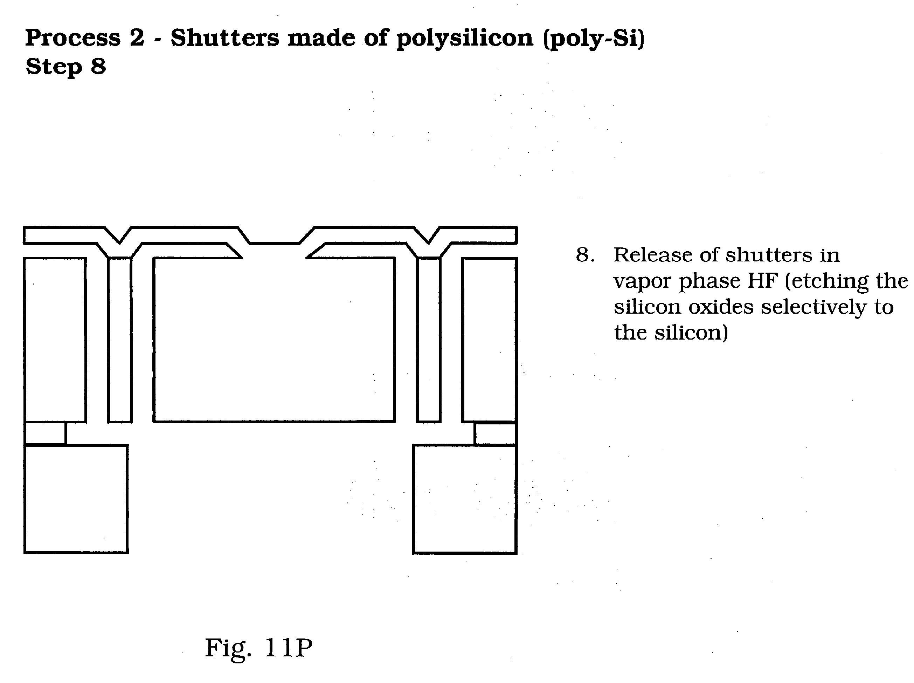

The manufacturing process described below is a first example only and depicted in the sequence of Figs. 11A to 11H.
a. The substrate is e.g. an SOI or silicon-on-insulator wafer as is shown in Fig. 11A. The thickness of layers may be, e. g.:
   - Handle/Bottom wafer : preferably about 350 *µ*m.
   - BOX (buried silicon dioxide) : preferably 2 *µ*m.
   - Device layer : about 15 *µ*m.
b. It follows a step of creating a pattern on the wafer back side as etch mask to define the through holes of the shutter array. Preferably, different materials or material combinations are possible for this masking layer.
c. Deep reactive ion etching or DRIE of wafer backside down to the BOX is realized: Fig. 11B.
d. Photoresist or PR coating and patterning on wafer front side, i.e. the device layer to define the etch mask for the deep reactive ion etching (DRIE). The open pattern corresponds to the shape of the trenches, which define the cross-section of the shutters and the surrounding frames.
e. DRIE of the trenches into the device layer by utilizing the PR mask. The BOX is used as an etch stop. Hence all the trenches and thus the shutters have exactly the same height: Fig. 11C.
f. Filling of the trenches with silicon dioxide: Fig. 11D. This is necessary to create a closed surface for the creation of the torsion beam later on. This surface, however, is relatively rough and needs to be smoothed (next step).
g. Chemical-mechanical polishing or CMP to smooth out the rough surface of the silicon dioxide: Fig. 11E. This is necessary to create a suitable surface and thickness of the next process steps.
h. PR coating and patterning to define attachment and anchor holes of the bridge/torsion beam, which will suspend the shutter.
i. RIE of silicon dioxide to open the attachment and anchor holes of the bridges: Fig. 11F.
j. Depositing the material, out of which the torsion beams will be etched: Fig. 11G. Preferably, poly-silicon is a suitable material.
k. PR coating and patterning to define the lateral bridge/torsion beam dimensions.
1. RIE of poly-silicon. The bridges/torsion beams are now defined.
m. Vapour phase etching of the silicon dioxide, which will release the shutter and the bridges. The shutters are suspended by the torsion beams, which themselves are attached to the frame. The frame is connected to an outer wafer frame.
n. The chip release is performed in the same step as the device release: Fig. 11H. For this purpose, the backside and front side have special trenches that allow the virtual dry release of the shutter-array chip.
o. The shutter chip is *µ*- or micro-assembled with the electrode chip. The electrode chip will be assembled onto the device layer side of the shutter chip. The electrodes and opaque blocking layers of the electrode chip are fabricated by standard PR patterning and etching of ITO for the transparent electrode and aluminium for the stray light blocker.
D2. Proposed Micro-Fabrication Process (according to a second embodiment of the present invention)

The manufacturing process described below is a second example only and depicted in the sequence of Figs. 111 to 11P.
a. A substrate - e.g. an SOI or silicon-on-insulator wafer as is shown in Fig. 111 - is provided. Again, the thicknesses of layers may be, e. g.:
   - Handle/Bottom wafer : preferably about 350 *µ*m.
   - BOX (buried silicon dioxide) : preferably 2 *µ*m.
   - Device layer : about 15 *µ*m.
b. It follows a step of creating a pattern on the wafer back side as etch mask to define the through holes of the shutter array. Preferably, different materials or material combinations are possible for this masking layer.
c. Again, via deep reactive ion etching or DRIE of wafer backside is applied down to the BOX as is shown in Fig. 11J.
d. Again, photoresist or PR coating and patterning on wafer front side is applied, i.e. the device layer in order to define the etch mask for the deep reactive ion etching or DRIE. A cavity is created for defining the shutter at a later stage of the processing.
e. DRIE of the trenches into the device layer by utilizing the PR mask. The BOX is used as an etch stop. Hence all the trenches and thus the shutters have exactly the same height: Fig. 11K.
f. Filling of the trenches with silicon dioxide: Fig. 11L. This is necessary to create a closed surface for the creation of the torsion beam later on. This surface, however, is relatively rough and needs to be smoothed (next step). The cavity remains inside the structure.
g. Chemical-mechanical polishing or CMP to smooth out the rough surface of the silicon dioxide: Fig. 11M. This is necessary to create a suitable surface and thickness of the next process steps. The cavity remains inside the structure.
h. PR coating and patterning follows in order to define attachment and anchor holes of the bridge/torsion beam, which will suspend the shutter. The cavity remains inside the structure.
i. RIE of silicon dioxide to open the attachment and anchor holes of the bridges: Fig. 11N. With generation of the openings for the anchors accesses to the cavities a created.
j. Depositing the material follows out of which the torsion beams will be etched: Fig. 110. Thereby the cavity is automatically filled, e.g. preferably with poly-silicon as a suitable material.
k. Finally the shutters are released in a vapour phase HF etching process, wherein silicon oxides are etched selectively to silicon.

### Remark

The back side etching mentioned abovecould also take place at the very end of the shutter and front side fabrication. This way the wafer has more structural strength throughout the process. A suitable mask, however, has to be chosen and patterned at the beginning of the process. The mask must then survive all of the other process steps until it will be used for the back side DRIE at the end of the process prior to the release step.

### E. Main advantages

Originality when compared to other t-MEMS proposals :
- based on a unique combination of silicon bulk and surface micro-machining manufacturing
- pixel movement is based on torsion (no friction)
- potential for low cost mass-production (limited number of masks)
- frame surrounding each pixel (acting as electrical and optical shield, thus avoiding crosstalk)

The invention will now be explained based on preferred embodiments thereof and by taking reference to the accompanying and schematical figures.
- **Fig. 1A, 1B**: are schematical and cross-sectional side views of a first embodiment of a shutter device according to the present invention in an open and in a closed state, respectively, and having an explicit transparent electrode.
- **Fig. 2A, 2B**: are schematical top views of the embodiments shown in Figs. 1A, 1B, respectively.
- **Fig. 3A, 3B**: are schematical and cross-sectional side views of another embodiment of a shutter device according to the present invention in an open and in a closed state, respectively, and having an explicit transparent electrode.
- **Fig. 4A, 4B**: are schematical top views of the embodiment shown in Figs. 3A and 3B, respectively, and having an explicit transparent electrode.
- **Fig. 5** - **7**: are schematical and cross-sectional side views of further embodiments of a shutter device according to the present invention and having an explicit transparent electrode.
- **Fig. 8A, 8B**: are a schematical and cross-sectional side view and top view, respectively, of another embodiment of a shutter device according to the present invention in an open state.
- **Fig. 9A, 9B**: are a schematical and cross-sectional side view and top view, respectively, of another embodiment of a shutter device according to the present invention in a closed state.
- **Figs. 10A. 10B**: are a schematical top view and a schematical and crosssectional side view, respectively, of still a further embodiment of a shutter device according to the present invention.
- **Fig. 11A** - **11H**: demonstrate by means of schematical and cross-sectional side views a first possible manufacturing process for an embodiment of a shutter device according to the present invention.
- **Fig. 11I** - **11P**: demonstrate by means of schematical and cross-sectional side views a second possible manufacturing process for an embodiment of a shutter device according to the present invention.
- **Fig. 12A, 12B**: demonstrate by means of a schematical and cross-sectional side view an embodiment of a pixel arrangement according to the present invention in a open state for all pixels and in a closed state for all pixels, respectively, in an anti-butterfly configuration, and having an explicit transparent electrode.
- **Fig. 13A, 13B**: demonstrate by means of a schematical and cross-sectional side view an embodiment of a pixel arrangement according to the present invention in a open state for all pixels and in a closed state for all pixels, respectively, in a butterfly configuration and having an explicit transparent electrode.
- **Fig. 14A. 14B**: demonstrate by means of a schematical and cross-sectional side view a further embodiment of a pixel arrangement according to the present invention in a open state for all pixels and in a closed state for all pixels, respectively, in an anti-butterfly configuration and having an explicit transparent electrode.
- **Fig. 15A, 15B**: demonstrate by means of a schematical and cross-sectional side view a further embodiment of a pixel arrangement according to the present invention in a open state for all pixels and in a closed state for all pixels, respectively, in a butterfly configuration and having an explicit transparent electrode.
- **Fig. 16A, 16B**: are cross-sectional and schematical side views of an embodiment of the shutter device according to the present invention of a reflective type and having an explicit transparent electrode.
- **Fig. 17A, 17B**: are cross-sectional and schematical side views of a further embodiment of the shutter device according to the present invention of a reflective type and having an explicit transparent electrode.

In the following functional and structural similar or equivalent element structures will be denoted with the same reference symbols. Not in each case of their occurrence a detailed description will be repeated.

In the following, light propagation directions for primary and secondary illumination light L1 and L2, respectively, are indicated in the Figs. as arrows. However, opposite propagation directions for said primary and secondary illumination light L1 and L2, respectively, are also possible, i.e. the devices 10, P may be used in a reversed manner.

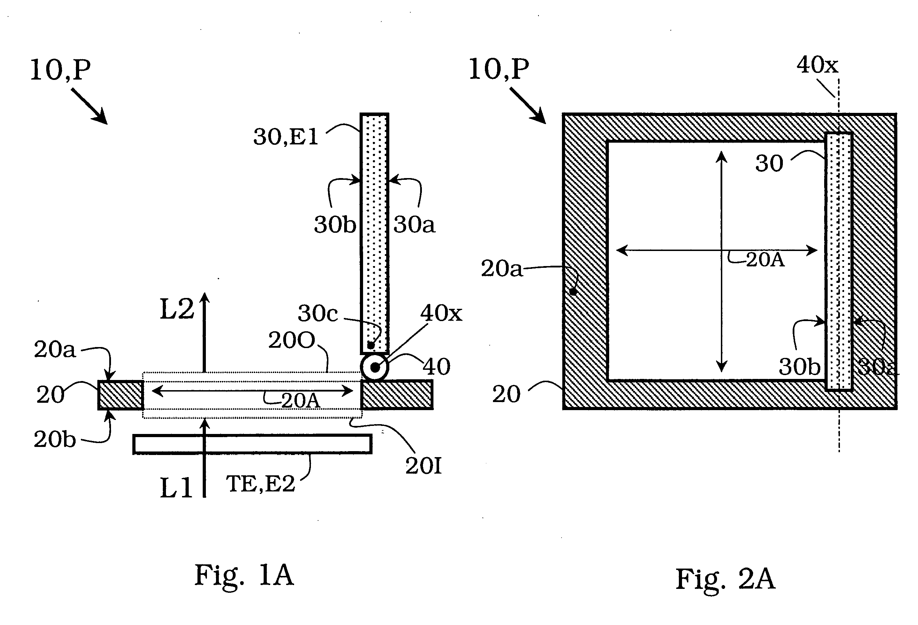

Fig. 1A is a cross-sectional and schematical side view of a first embodiment of a shutter device 10 according to the present invention. The shutter device 10 for a pixel element P of Fig. 1A is of the transmittive type and represented in an open state in Fig. 1A as primary illumination light L1 may enter the shutter device 10 of Fig. 1A through a input pixel aperture 20I of a pixel area 20A and may leave the shutter device 10 of Fig. 1A after penetration of the pixel area 20A through an output pixel aperture 200 of said pixel area 20A of the shutter device 10 of Fig. 1A. Shutter device 10 of Fig. 1A is majorly built up by a frame element 20 having an upper surface 20a and a lower surface 20b and acting as a frame, thereby forming, comprising or defining said pixel area 20A with its input pixel aperture 20I for a receiving primary illumination light and said output pixel aperture 200 for emitting and providing said secondary illumination light 20L derived from said primary illumination light L1. Additionally, said shutter device 10 comprises a shutter element 30 comprising a first or upper surface 30a and a second or lower surface 30b. The shutter device 30 is mechanically and - in this case also - electrically connected to said frame element 20 by means of a connecting element 40 which is formed as a torsion hinge 40' defining a torsion axis or hinge axis which serve as a rotation axis 40x or tilting axis 40x. The connecting element 40 is mechanically connected to said shutter element at a position located at an edge 30c of said shutter element 30.

In Fig. 1A shutter element 30 is oriented almost perpendicular with respect to said pixel area 20A in order to enable primary illumination light L1 to penetrate said shutter device 10 as said secondary illumination light L2. The orientation of the shutter element 30 of the shutter device 10 in Fig. 1A is referred to as a first geometrical state.

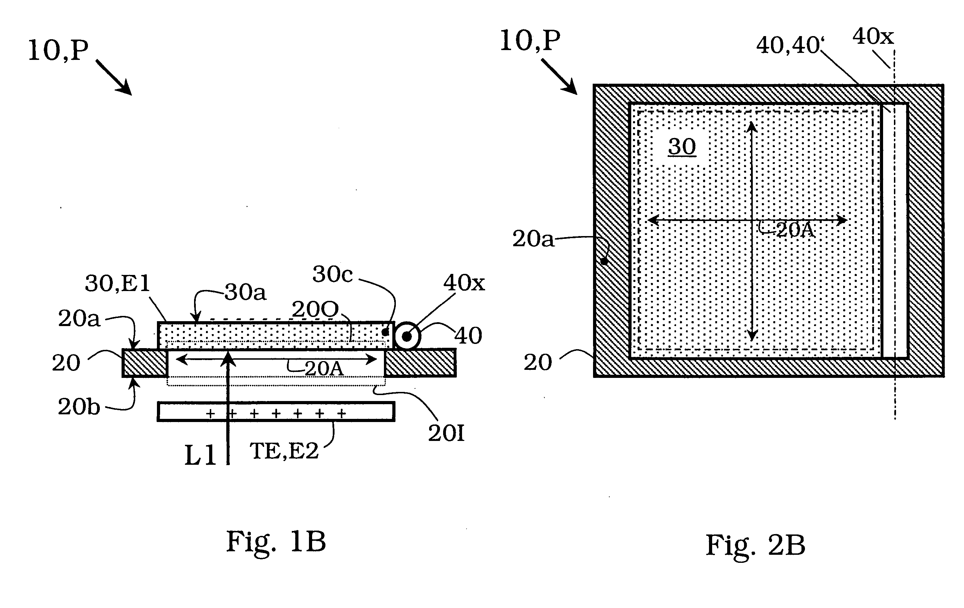

In contrast thereto in Fig. 1B the closed situation for the shutter device 10 of Fig. 1A is demonstrated by means of a cross-sectional and schematical side view. In the case of Fig. 1B said shutter element 30 has now being tilted or rotated about the rotation axis 40x or tilting axis 40x so that the shutter element 30 now completely covers the output pixel aperture 200 and therefore the complete pixel area 20A in order to completely block and/or absorb the primary illumination light L1 entering from said input pixel aperture 20I by means of its lower surface 30b.

As can be seen from Figs. 1A and 1B, a second electrode means E2 is provided which is an optical transparent counter electrode TE below said lower surface 20b and said pixel aperture 20I of said frame element 20 and covering the same from below.

In order to achieve the second geometrical state for the shutter element 30 shown in Fig. 1B. the mechanical deformation of the torsion hinge 40' as a connecting element 40 and the thereby caused deformation forces and torques to overcome have to be achieved by applying electrical potentials of opposite polarisations to said shutter element 30 and said optical transparent counter electrode TE which in this case serve as first and second electrode means E1 and E2, respectively, which are electrically insulated with respect to each other.

In the case of Fig. 1A no potential is applied between said shutter element 30 as said first electrode means E1 and said optical transparent counter electrode TE as said second electrode means E2, whereas in Fig. 1B said shutter element 30 as said first electrode means E1 is provided with a negative potential and said optical transparent counter electrode TE as said second electrode means E2 is provided with a positive potential.

Figs. 2A and 2B demonstrate the same situations as shown in Figs. 1A and 1B by means of schematical and cross-sectional top views.

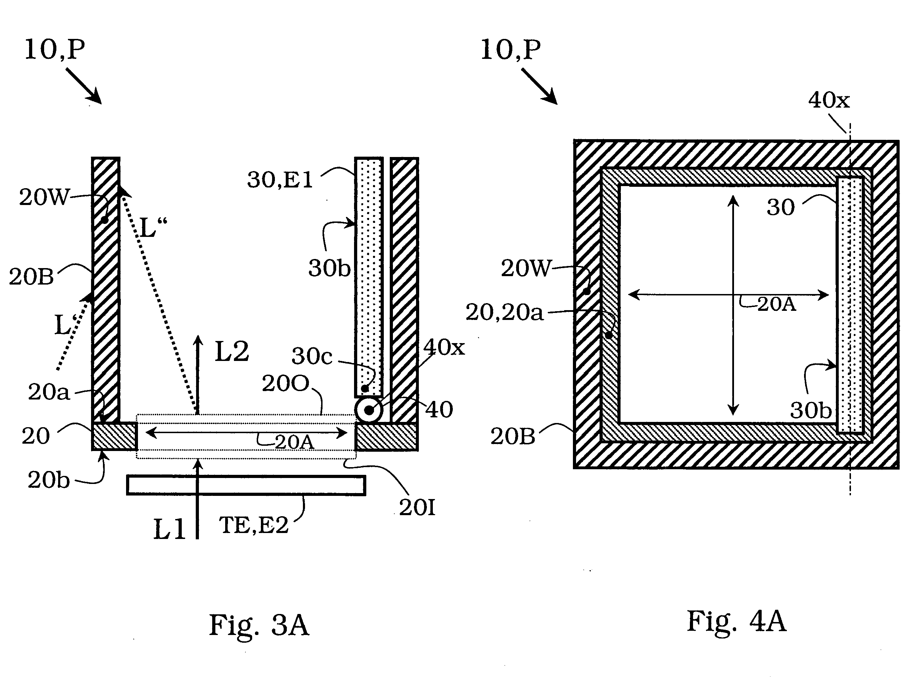

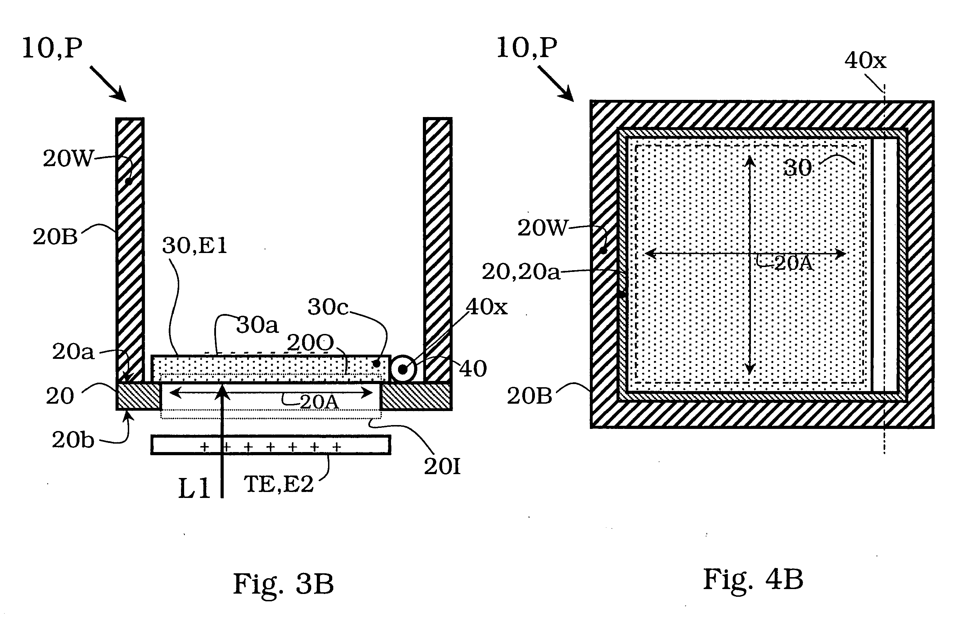

The sequence of Figs. 3A, 3B, 4A and 4B demonstrate similar situations as shown in Figs. 1A to 2B for another embodiment for a shutter device 10 according to the present invention. The embodiment of the shutter device 10 according to the sequence of Figs. 3A to 4B differs from the former embodiment in that this embodiment comprises as a part of the frame element 20 a so-called frame box 20B which is built up by frame bolts 20W which are positioned on the upper surface 20a of the frame element 20 at its outer periphery or along its edges 20c and which extend more or less perpendicularly from the upper surface 20a of the frame element 20 and therefore more or less perpendicular with respect to the pixel area 20a defined by said frame element 20 and which contains said shutter element 30 in its inner volume. The frame box 20b is an open box or an open cuboid or parallelepiped in order to enable as can be seen in Fig. 3A is similar entering and penetration of primary illumination light L1 from input pixel aperture 20I of said pixel area 20A and the emission of secondary illumination light L2 from said output pixel aperture 200 of said pixel area 20A. The walls 20W of said frame box 20B avoiding stray light of a particular range of stray angles therefore avoiding a cross torque process between directly neighboured pixel elements having similar shutter devices 10. Therefore enhancing contrast features and properties of the shutter device 10 according to the present invention of this embodiment.

Again in Figs. 3A to 4B the shutter element 30 has a plate-like structure and is in Figs. 3A and 4A oriented perpendicularly to said pixel area 20A and therefore parallely to the frame box walls 20W. In Figs. 3B and 4B shutter element 30 is tilted by 90° by the application of negative and positive electrical potentials to said frame element 20 and said shutter element 30, respectively, so that the shutter element 30 is now oriented more or less parallely with respect to the pixel area 20A.

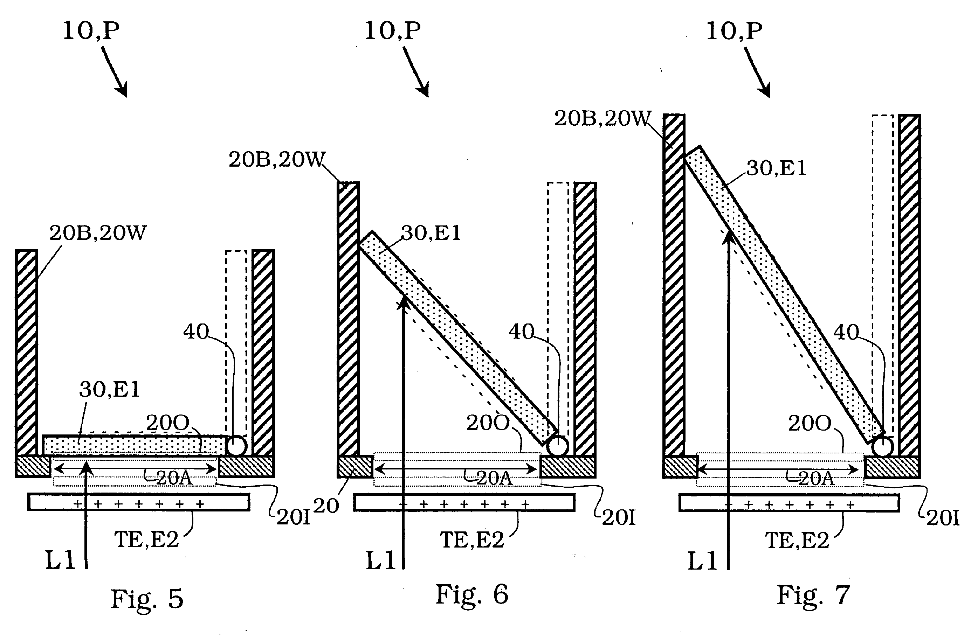

The sequence of Figs. 5 to 7 is comparable to the situations shown in Figs. 3A and 3B and demonstrates the advantage of having shutter elements 30 which have an extension in a direction perpendicular to the rotation axis or tilting axis 40x which is larger than the extension of the pixel area 20a in this direction. Fig. 5 directly corresponds to the situation shown in Fig. 3B, i.e. the extensions of the shutter element 30 and of the pixel area 20A in the direction perpendicular to the rotation axis 40x or tilting axis 40x almost coincide so that the shutter element 30 fits to the extension or width of the frame box 20B.

In contrast to the situation shown in Figs. 5 and 3B the shutter elements 30 of Figs. 6 and 7 have a larger extension in the direction perpendicular to the rotation axis 40x or tilting 40x, then the pixel area 20A in that direction. Therefore in Figs. 6 and 7 the shutter element 30 have to be tilted by an tilting angle about the tilting axis 40x which is less than 90°. As the mentioned extension of the shutter element 30 in Fig. 7 is larger than the respective extension in the embodiment shown in Fig. 6, the tilting angle necessary in the embodiment shown in Fig. 7 is even lesser than the tilting angle shown in Fig. 6 necessary in order to avoid the penetration of primary illumination light L2 derived from primary illumination light L1 penetrating the pixel area 20A from its input pixel aperture 20I to its output pixel aperture 200.

In order to better achieve the tilting action for the shutter element 30 also the walls 20W or a part thereof can be subjected to a respective electrical potential in order to overcome the deformation forces of the connecting element 40 or of the torsion hinge 40' in Figs. 6 and 7.

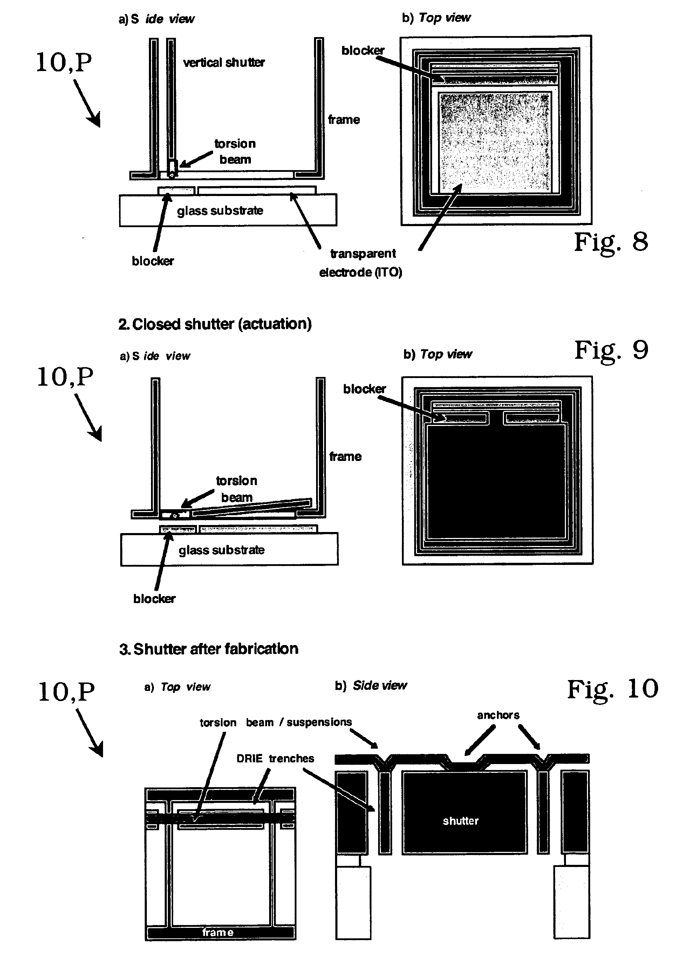

The sequence of Figs. 8 to 10 describes a more concrete embodiment for the shutter device 10 according to the present invention which can be achieved by a bulk micro-machining process. These embodiments have been described above.

The sequences of Figs. 11A to 11H and 11I to 11P describe respective examples for such bulk micro-machining processes and have been described above.

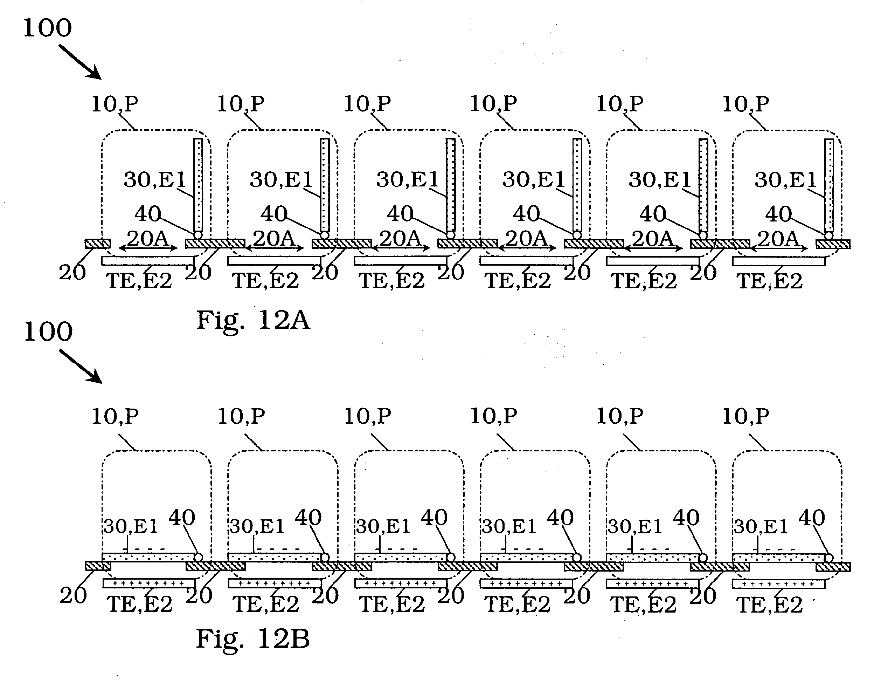

Figs. 12A to 15B describe different embodiments of pixel arrangements 100 using different embodiments of shutter devices 10 according to the present invention.

Figs. 12A and 12B demonstrate by means of a schematical and cross-sectional side view a pixel arrangement 100 comprising a plurality of shutter devices 10 according to the present invention as shown in Figs. 1A to 2B, i.e. without having frame boxes 20B for each individual shutter device 10. All individual shutter devices 10 have same configurations and orientations. Fig. 12A demonstrates an open state for all shutter devices 10 whereas Fig. 12B demonstrates a closest state for all individual shutter devices 10. However, it is to be understood that the shutter devices 10 of the embodiment for the pixel arrangement 100 are controlled independently from each other, in order to achieve an arbitrary configuration of opened and closed states as said first and said second geometrical states for the individual shutter devices 10.

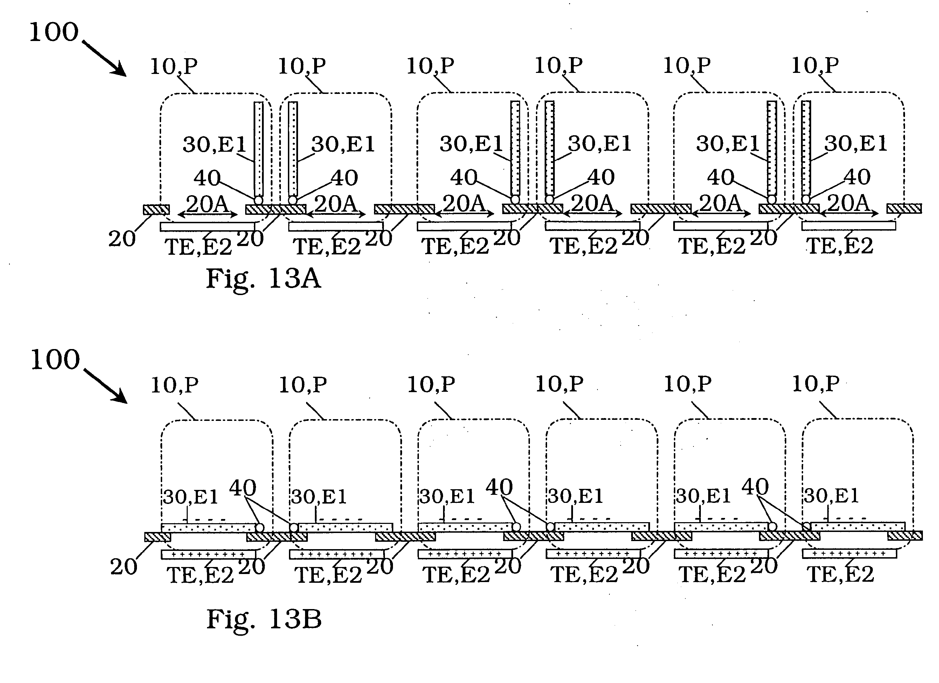

Figs. 13A and 13B are similar with the situation shown in Figs. 12A and 12B except in that the individual shutter devices 10 of the pixel arrangement 100 of Fig. 13A, 13B have with respect to each other a butterfly configuration where pairs of directly neighbouring shutter devices 10 in one extending direction of the plurality of pixels have back-to-back oriented shutter elements 30 where the upper surfaces 30a of the butterfly configured pairs of shutter devices 10 face each other. Again, Fig. 13A demonstrates open states as first geometrical states for the entity of shutter devices 10. Fig. 13B demonstrates closed states as second geometrical states for the entity of shutter devices 10.

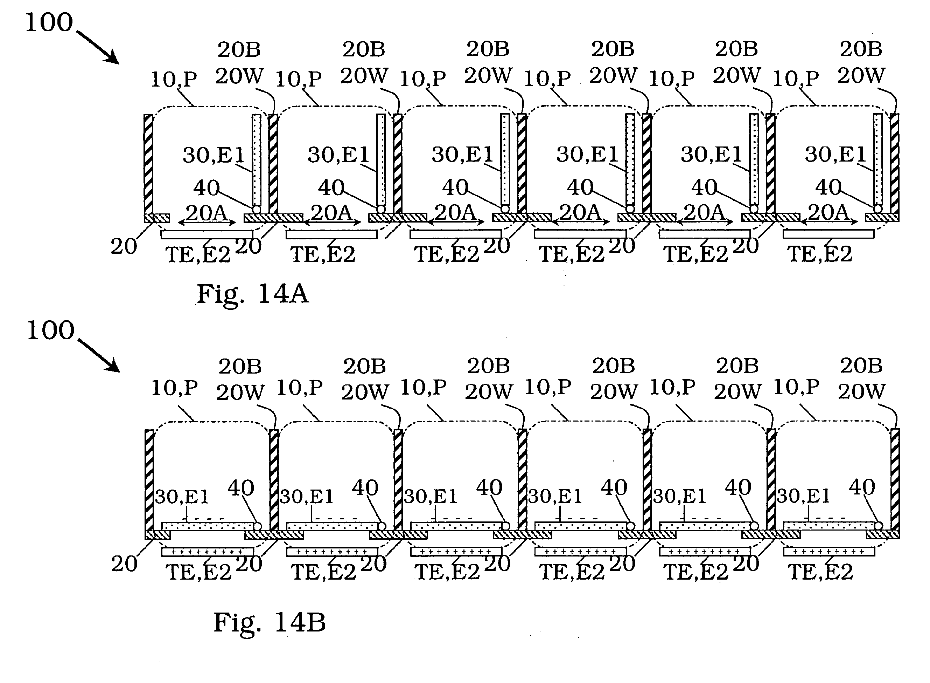

The embodiments shown in Figs. 14A, 14B correspond to the embodiment shown in Figs. 12A, 12B now also comprising frame boxes 20B for the individual shutter devices 10 being formed by respective frame walls 20W. Again Figs. 14A and 14B demonstrate open states and closed states for the individual shutter devices 10.

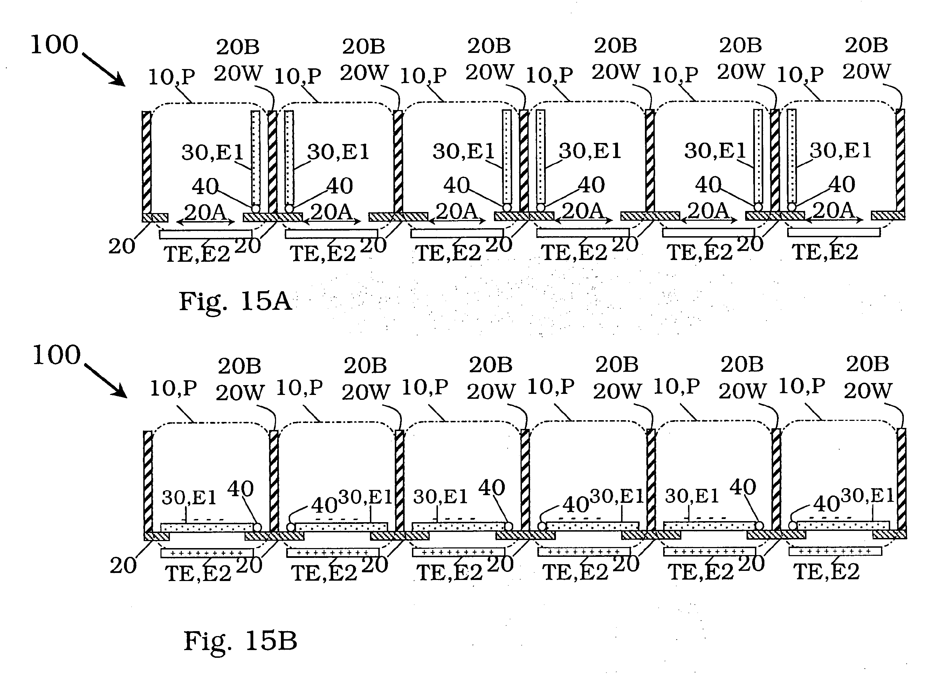

Figs. 15A and 15B directly correspond to the situation shown in Figs. 13A and 13B except that again frame boxes 20B formed by frame walls 20W are provided for the individual shutter devices 10.

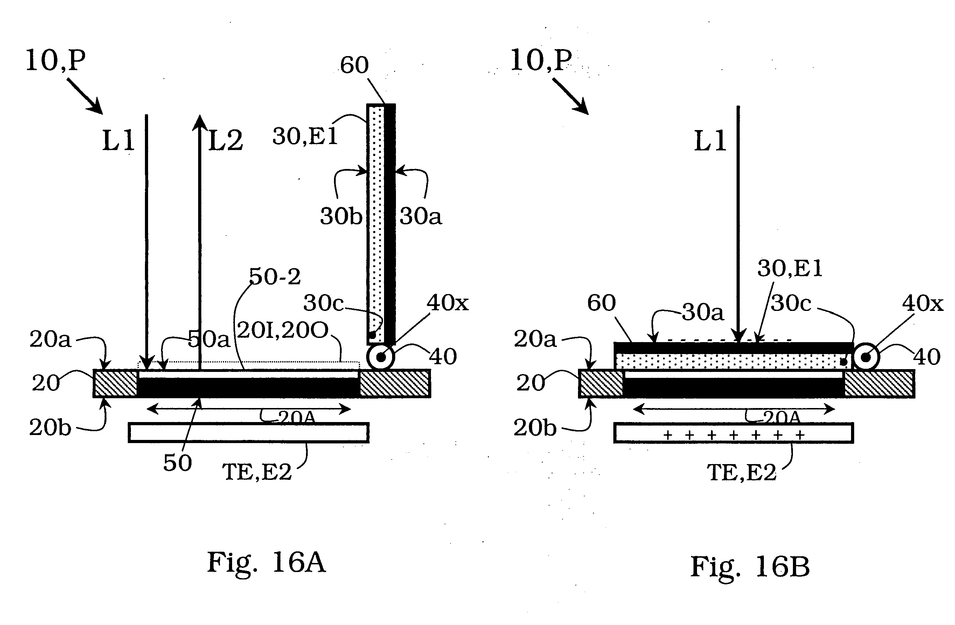

Figs. 16A and 16B demonstrate an embodiment of the shutter device 10 according to the present invention which realizes a reflective type of pixel element. Therefore the pixel area 20A is not defined by an aperture in the sense of a penetrating recess or hole but it is defined by a film 50 comprising a first or lower section 50-1 as a support and a second or upper section 50-2 which realizes a reflective surface 50a. The film 50 for the pixel area 20A is surrounded by the elements which built up the frame element 20.

In Fig. 16A the shutter device 10 is shown in its non-actuated state where the shutter element 30 is oriented and positioned essentially perpendicular with respect to the plane defined by the pixel area 20A. The shutter element 30 itself comprises an absorption film as its first or upper surface 30a.

In the situation shown in Fig. 16A primary illumination light L1is entering from above and therefore reflected at the surface 50a of the film 50 defining the pixel area 20A thereby providing and emitting secondary illumination light L2. Therefore, said pixel area 20A can be referred to as processing an output pixel aperture 201 and an output pixel aperture 200 on the same side of the film 50 defining the pixel area 20A. In the situation shown in Fig. 16B said shutter element 30 has been tilted or rotated by subjecting said optical transparent counter electrode TE as said second electrode means E2 and said shutter element 30 as said first electrode means E1 to a positive and to a negative potential, respectively, thereby acting against the deformational forces or torques caused by the provided connecting element 40 in the form of a torsion hinge 40' which connects mechanically said shutter element 30 with said frame element 20.

Therefore in Fig. 16B incident or entering primary illumination light L1 does not hit said pixel area 20A and the reflective component 50-2 of the film 50 defining the pixel area 20A but the first or upper surface 30a of the shutter element 30 which is defined by the absorption film 60 which causes absorption of said primary illumination light L1 without having reflected secondary illumination light L2.

Of course an opposite configuration is also possible and within the scope of the present invention. Therefore, the film component 50-2 of the film 50 defining the pixel area 20A may have absorption properties and the film 60 defining the upper surface 30a of the shutter element 30 may have reflective properties so that in the open state equivalently to the situation shown in Fig. 16A said entering primary illumination light L1 is absorbed and in the situation equivalent to the situation shown in Fig. 16B said primary illumination light L1 would be reflected as secondary illumination light L2.

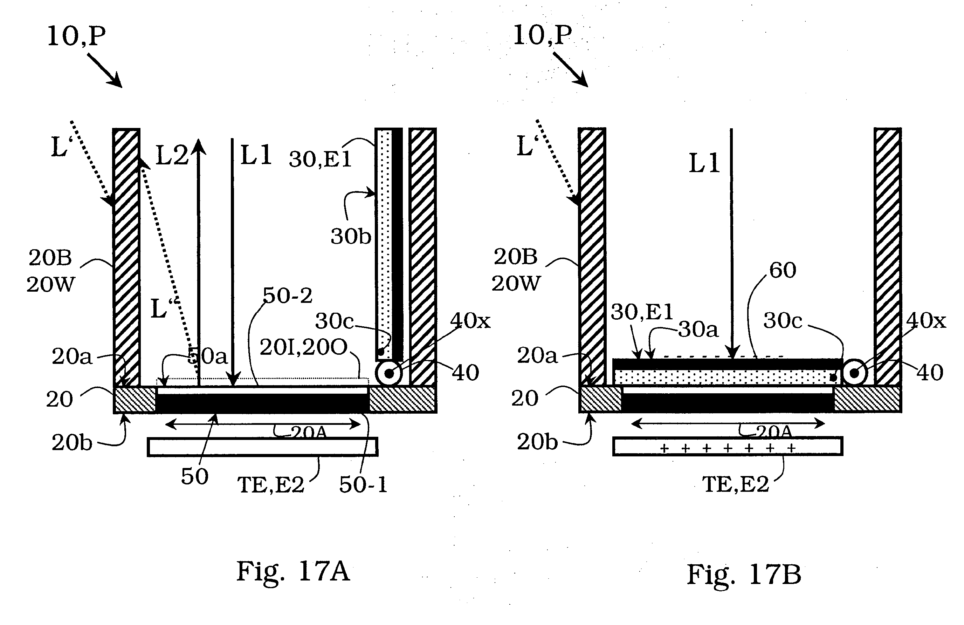

Figs. 17A and 17B demonstrate similar situations when compared to Figs. 16A and 16B except in that the frame element 20 of the configuration shown in Fig. 17A and 17B comprises a frame box 20B which is defined by respective frame walls 20W. As mentioned before the walls 20W of said frame box inter alia avoid stray lights L' and L" from the outside and the inside, respectively, in order to avoid a cross torque process between shutter devices 10 of directly neighboured pixel elements P.

In the embodiments shown in the figures an explicit transparent electrode TE or counter electrode TE is provided as a respective second electrode E2. It is situated beneath each frame element 20 and beneath the respective pixel area 20A. An electrical driving potential can be applied between each shutter element 30 acting as a first electrode E1 and the respective transparent electrode TE acting as a second or counter electrode E2 in order to operate the shutter device 10 for opening and closing the pixel area 20A.

### Reference Symbols

- **10**: shutter device according to the present invention
- **20**: frame element, frame means, frame
- **20a**: upper surface
- **20A**: pixel area
- **20b**: lower surface
- **20B**: frame box
- **201**: input pixel aperture
- **200**: output pixel aperture
- **20W**: frame wall
- **30**: shutter element, shutter
- **30a**: 1^{st} or upper surface
- **30b**: 2^{nd} or lower surface
- **30c**: edge
- **40**: connecting element
- **40'**: hinge, torsion hinge
- **40x**: rotation axis, tilting axis
- **50**: film reflective pixel area 20a
- **50-1**: first film component, support
- **50-2**: second film component
- **50a**: upper surface
- **60**: surface film for surface 30a of shutter element 30
- **100**: pixel arrangement according to the present invention

- **E1**: first electrode means, first electrode
- **E2**: second electrode means, second electrode
- **L1**: primary illumination light
- **L2**: secondary illumination light
- **P**: pixel, pixel element
- **TE**: (explicit) transparent electrode

## Claims

1. Shutter device (10) for a pixel element (P):
- comprising a frame element (20) and a shutter element (30),
- wherein said frame element (20) is adapted in order to comprise or to define a pixel area (20A) for a pixel element (P),
- wherein said shutter element (30) is adapted in order to controllably take at least a first geometrical state and a second geometrical state by different degrees of actuation of said shutter element (30),
- wherein in said first geometrical state said shutter element (30) is arranged in order to optically cover said pixel area (20A) to a comparable lower extent,
- wherein in said second geometrical state said shutter element (30) is arranged in order to optically cover said pixel area (20A) to a comparable higher extent, and
- wherein said first geometrical state of said shutter element (30) corresponds to a non-actuated rest state of said shutter element (30).

2. Shutter device according to claim 1,
wherein in said non-actuated rest state of said shutter element (30) said shutter device (10) is essentially completely open for an access to said pixel area (20A).

3. Shutter device according to any one of the preceding claims,
wherein said frame element (20) is adapted in order to comprise or to define said pixel area (20A) as a section of a plane.

4. Shutter device according to any one of the preceding claims,
wherein said shutter element (30) is or comprises a plate-like construction, in particular having an upper surface (30a) and a lower surface (30b).

5. Shutter device according to any one of the preceding claims,
wherein in said non-actuated rest state of said shutter element (30) said shutter element (30) or a substantial part thereof is positioned essentially perpendicularly with respect to said pixel area (20A).

6. Shutter device according to any one of the preceding claims,
wherein in an actuated state or in said at least one second geometrical state said shutter element (30) or a substantial part thereof is tilted with respect to said pixel area (20A) by an angle below 90° with the lower surface (30b) of said shutter element (30) facing said pixel area (20A).

7. Shutter device according to any one of the preceding claims,
wherein in an actuated state or in said at least one second geometrical state said shutter element (30) or a substantial part thereof is positioned essentially parallel with. respect to said pixel area (20A).

8. Shutter device according to any one of the preceding claims,
wherein said shutter element (30) is mechanically connected to said frame element (20).

9. Shutter device according to any one of the preceding claims,
- wherein a connecting element (40) is provided, and
- wherein said shutter element (30) is mechanically connected to said frame element (40) by means of said connecting element (40).

10. Shutter device according to any one of the preceding claims,
wherein said connecting element (40) is integrally formed with one or with both of said frame element (20) and said shutter element (30).

11. Shutter device according to any one of the preceding claims 9 or 10,
wherein said connecting element (40) is or comprises at least one hinge element (40').

12. Shutter device according to claim 11,
wherein said hinge element (40') is a torsion hinge.

13. Shutter device according to any one of the preceding claims 11 or 12,
wherein said non-actuated rest state of said shutter element (30) corresponds to an unbiased rest state of said hinge element (40').

14. Shutter device according to any one of the preceding claims 9 to 13,
wherein said connecting element (40) is adapted in order to comprise or to define a rotational axis or tilting axis (40x) about which said shutter element (30) is rotatable or tiltable, respectively, in order to take at least said first and said second geometrical states.

15. Shutter device according to any one of the preceding claims 9 to 14,
- wherein said shutter element (30) comprises an edge (30c) and
- wherein said shutter element (30) is mechanically connected to said connecting element (40) by means of or at said edge (30c).

16. Shutter device according to any one of the preceding claims,
wherein said frame element (20) and said shutter element (30) are electrically connected with respect to each other, in particular by means of said connecting element (40).

17. Shutter device according to any one of the preceding claims,
wherein said shutter element (30) is adapted in order to serve as a first electrode means (E1).

18. Shutter device according to any one of the preceding claims,
- wherein a second electrode means (E2) is provided and
- wherein said second electrode means (E2) is electrically insulated and uncoupled from said shutter element (30) and in particular from said from said frame element (20).

19. Shutter device according to claim 18,
wherein said second electrode means (E1) is optically transparent.

20. Shutter device according to any one of the preceding claims 18 or 19,
wherein said second electrode means (E1) is adapted and arranged in order to cover said pixel area (20A).

21. Shutter device according to any one of the preceding claims 18 to 20,
wherein said second electrode means (E1) is adapted and arranged in order to cover said pixel area (20A) at or from a lower surface (20b) of said frame element (20).

22. Shutter device according to any one of the preceding claims 18 to 21,
wherein said second electrode means (E1) is adapted and arranged in order to cover said pixel area (20A) at or from an input aperture (20I) of said frame element (20).

23. Shutter device according to any one of the preceding claims,
wherein said shutter element (30) - as said first electrode means (E1) - is adapted in order to be actuable by means of electrical potentials applied to said shutter element (30) - as said first electrode means (E1) - and said second electrode means (E2).

24. Shutter device according to any one of the preceding claims,
wherein said first and said second geometrical states of said shutter element (30) are definable by means of electrical potentials applied to said shutter element (30) - as said first electrode means (E1) - and said second electrode means (E2)..

25. Shutter device according to any one of the preceding claims,
wherein one or a plurality of frame walls (20W) is provided, in particular at the periphery of the frame element (20), protruding essentially perpendicular with respect to said pixel area (20A).

26. Shutter device according to claim 25,
wherein a plurality of frame walls (20W) is provided forming an open frame box (20B) surrounding the periphery of said frame element (20) with bottom and top openings allowing an optical access to said pixel area (20A).

27. Shutter device according to claim 26,
wherein said frame box (20B) is adapted in order to form an open cuboid or parallelepiped.

28. Shutter device according to any one of the preceding claims,
which is majorly formed as a bulk micro-machining structure.

29. Shutter device according to any one of the preceding claims,
wherein said pixel area (20A) has a length and/or a width in the range of about 10 *µ*m to about 20 *µ*m, preferably of about 15 *µ*m.

30. Shutter device according to any one of the preceding claims,
wherein the area of said shutter element (30) extends the pixel area (20A).

31. Shutter device according to any one of the preceding claims,
wherein the extension of said shutter element (30) perpendicular to said rotational or tilting axis (40x) is larger than the extension of the pixel area (20A) along the same direction.

32. Shutter device according to any one of the preceding claims,
wherein said frame element (20) and/or said frame box (20B) are adapted in order to have or to define a input pixel aperture (20I) for receiving primary illumination light (L1) and to have or to define a output pixel aperture (200) for emitting secondary illumination light (L2) derived from said primary illumination light (L1).

33. Shutter device according to any one of the preceding claims,
which is adapted for a transmittive pixel element (P).

34. Shutter device according to any one of the preceding claims,
wherein said pixel area (20A) is defined by a pixel aperture extending through said frame element (20).

35. Shutter device according to any one of the preceding claims 33 and 34,
wherein said input pixel aperture (20I) and said output pixel aperture (200) are positioned on opposite sides with respect to said frame element (20) or said frame box (20B).

36. Shutter device according to any one of the preceding claims 1 to 31,
which is adapted for a reflective pixel element (P).

37. Shutter device according to claim 36,
- wherein said pixel area (20a) is defined by a reflective surface and
- wherein said upper surface (30a) of said shutter element (30) is non-reflective.

38. Shutter device according to claim 36,
- wherein said pixel area (20a) is defined by a non-reflective surface and
- wherein said upper surface (30a) of said shutter element (30) is reflective.

39. Shutter device according to any one of the preceding claims 36 to 38,
wherein said input pixel aperture (20I) and said output pixel aperture (200) are positioned on the same side with respect to said frame element (20) or said frame box (20B).

40. Shutter device according to any one of the preceding claims 36 to 38,
which is adapted for a micro-pixel (P) or for a pixel element (P) of a micro-display.

41. Pixel arrangement,
comprising a plurality of pixel elements (P) each pixel element (P) having a shutter device (10) according to any one of the preceding claims 1 to 40.

42. Pixel arrangement according to claim 41,
wherein shutter devices (10) of directly neighbouring pixel elements (P) have a butterfly or an anti-butterfly configuration or orientation.

43. Pixel arrangement according to any one of the preceding claims 41 or 42,
wherein shutter devices (10) of directly neighbouring pixel elements (P) have a same or common configuration or orientation.
